# EUROPEAN PATENT APPLICATION

(11) **EP 4 415 106 A1**
(43) Date of publication of application: **14.08.2024**
(21) Application number: 22878024.3
(22) Date of filing: 31.08.2022
(51) Int. Cl.: H01M 10/0585, H01M 4/134, H01M 4/40, H01M 10/0562

(54) **ALL-SOLID-STATE BATTERY AND METHOD FOR MANUFACTURING ALL-SOLID-STATE BATTERY**

(30) Priority: 05.10.2021 JP 2021163922
(71) Applicant: NISSAN MOTOR CO., LTD., Yokohama-shi, Kanagawa 221-0023 (JP); RENAULT S.A.S., 92100 Boulogne-Billancourt (FR)
(72) Inventor: TAGUCHI, Kaishi, Atsugi-shi, Kanagawa 243-0123 (JP); ONO, Yoshitaka, Atsugi-shi, Kanagawa 243-0123 (JP); OGAWA, Tomaru, Atsugi-shi, Kanagawa 243-0123 (JP); KABURAGI, Tomohiro, Atsugi-shi, Kanagawa 243-0123 (JP)
(74) Representative: Grünecker Patent- und Rechtsanwälte PartG mbB
(86) International application number: PCT/IB2022/000498
(87) International publication number: WO 2023/057811

(57) **Abstract**

It is an object of the present invention to provide an all solid-state battery and a method for manufacturing all solid-state battery capable of reducing damage during the manufacturing process. An all solid-state battery comprising: a positive electrode current collector; a positive electrode active material layer provided on a surface of the positive electrode current collector; a first elastic member covering a periphery of the positive electrode active material layer and having an elastic modulus less than or equal to an elastic modulus of the positive electrode active material layer; a solid electrolyte layer facing the positive electrode current collector with the first elastic member and the positive electrode active material layer in between; a negative electrode current collector facing the positive electrode current collector with the solid electrolyte layer in between; and a negative electrode active material layer provided between the negative electrode current collector and the solid electrolyte layer and disposed inside a periphery of the solid electrolyte layer, is provided.

## Description

### TECHNICAL FIELD

The present invention relates to an all solid-state battery and a method for manufacturing all solid-state battery.

### BACKGROUND ART

The development of an all solid-state battery such as an all-solid lithium secondary battery has been actively promoted. This all solid-state battery includes, for example, a positive electrode current collector layer, a positive electrode active material layer, a solid electrolyte layer, a negative electrode active material layer, and a negative electrode current collector layer in this order (See, for example, JP 2020-21551 A).

### SUMMARY OF INVENTION

In such an all solid-state battery, it is desirable to reduce damage during a manufacturing process, such as cracking of each layer. Therefore, an object of the present invention is to provide an all solid-state battery and a method for manufacturing all solid-state battery capable of reducing damage during the manufacturing process.

An all solid-state battery according to one embodiment of the present invention includes: a positive electrode current collector; a positive electrode active material layer provided on a surface of the positive electrode current collector; a first elastic member covering a periphery of the positive electrode active material layer and having an elastic modulus less than or equal to an elastic modulus of the positive electrode active material layer; a solid electrolyte layer facing the positive electrode current collector with the first elastic member and the positive electrode active material layer in between; a negative electrode current collector facing the positive electrode current collector with the solid electrolyte layer in between; and a negative electrode active material layer provided between the negative electrode current collector and the solid electrolyte layer and disposed inside a periphery of the solid electrolyte layer.

### BRIEF DESCRIPTION OF DRAWINGS

Fig. 1 is a cross-sectional view showing an example of a configuration of an all solid-state battery according to one embodiment of the present invention.
Fig. 2 is a view showing planar configurations of a positive electrode active material layer and a first elastic member shown in Fig. 1.
Fig. 3 is a cross-sectional view showing a part of the all solid-state battery shown in Fig. 1.
Fig. 4 is a cross-sectional view showing another example of the all solid-state battery shown in Fig. 3.
Fig. 5 is a cross-sectional view showing another example of the all solid-state battery shown in Fig. 3.
Fig. 6 is a cross-sectional view showing another example of the all solid-state battery shown in Fig. 3.
Fig. 7A is an enlarged view showing a part of the solid electrolyte layer and a part of the first elastic member shown in Fig. 4.
Fig. 7B is an enlarged view showing a part of the solid electrolyte layer and a part of the first elastic member shown in Fig. 6.
Fig. 8 is a view showing a planar configuration of a negative electrode active material layer and a second elastic member shown in Fig. 1.
Fig. 9 is a cross-sectional view showing another example of the all solid-state battery shown in Fig. 3.
Fig. 10 is a cross-sectional view showing another example of the all solid-state battery shown in Fig. 3.
Fig. 11A is a cross-sectional view showing one step of the method for manufacturing all solid-state battery shown in Fig. 1.
Fig. 11B is a cross-sectional view showing a step subsequent to the step shown in Fig. 11A.
Fig. 11C is a cross-sectional view showing a step subsequent to the step shown in Fig. 11B.
Fig. 12 is a cross-sectional view showing a step subsequent to the step shown in Fig. 11C.
Fig. 13 is a cross-sectional view showing another example of the step shown in Fig. 11C.
Fig. 14 is a cross-sectional view showing another example of the step shown in Fig. 12.
Fig. 15A is a cross-sectional view showing a configuration of an all solid-state battery at a SOC (State of charge) of 0%.
Fig. 15B is a cross-sectional view showing a configuration of an all solid-state battery at a SOC of 100%.
Fig. 16 is a cross-sectional view showing a method for manufacturing all solid-state battery according to a comparative example.
Fig. 17 is a cross-sectional view showing a configuration of a main part of an all solid-state battery according to a modified example.

### DESCRIPTION OF EMBODIMENTS

An all solid-state battery according to one embodiment of the present invention includes: a positive electrode current collector; a positive electrode active material layer provided on a surface of the positive electrode current collector; a first elastic member covering a periphery of the positive electrode active material layer and having an elastic modulus less than or equal to an elastic modulus of the positive electrode active material layer; a solid electrolyte layer facing the positive electrode current collector with the first elastic member and the positive electrode active material layer in between; a negative electrode current collector facing the positive electrode current collector with the solid electrolyte layer in between; and a negative electrode active material layer provided between the negative electrode current collector and the solid electrolyte layer and disposed inside a periphery of the solid electrolyte layer. According to the present invention, a first elastic member covering a periphery of a positive electrode active material layer is provided, and a solid electrolyte layer facing a positive electrode current collector with the first elastic member and the positive electrode active material layer in between is provided. Consequently, even when the solid electrolyte layer is pressed during manufacturing, a local force is less likely to be applied to the solid electrolyte layer, and the occurrence of cracking or the like of the solid electrolyte layer is reduced. Thus, it is possible to reduce damage during the manufacturing process.

Hereinafter, embodiments of the present invention will be described with reference to the drawings, but the technical scope of the present invention is not limited to the following embodiments. Note that dimensional ratios in the drawings are exaggerated for convenience of description, and may be different from actual ratios. Hereinafter, when it is described that the thicknesses of respective parts, the elastic moduli of respective parts, and the like are identical (equal), they may be substantially identical, and include manufacturing errors (e.g. about ± 5%) and the like.

### <Embodiment>

### [Configuration of All Solid-State Battery]

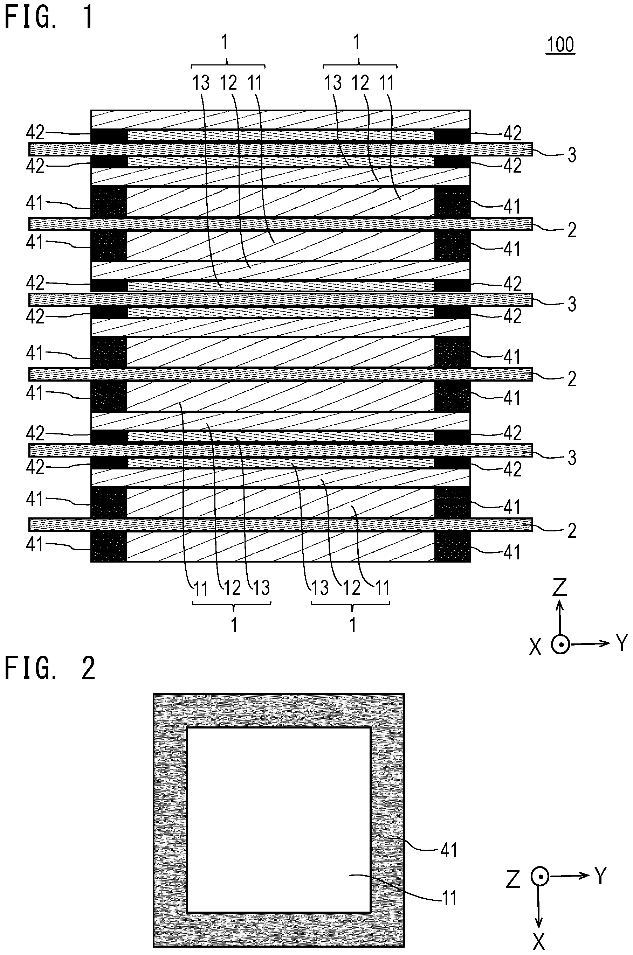

Fig. 1 shows an example of a configuration of an all solid-state battery 100 according to one embodiment of the present invention. The all solid-state battery 100 is, for example, an all-solid lithium secondary battery, and can be charged and discharged a plurality of times. The all solid-state battery 100 includes, for example, a plurality of power-generating element portions 1, a plurality of positive electrode current collectors 2, a plurality of negative electrode current collectors 3, a plurality of first elastic members 41, and a plurality of second elastic members 42. The positive electrode current collectors 2 and the negative electrode current collectors 3 are alternately laminated, and each of the power-generating element portions 1 is disposed between each of the positive electrode current collectors 2 and each of the negative electrode current collectors 3. In the all solid-state battery 100, for example, the positive electrode current collectors 2 are connected in parallel to one another, and the negative electrode current collectors 3 are connected in parallel to one another. In the following description, a direction of lamination of the positive electrode current collectors 2 and the negative electrode current collectors 3 may be referred to as a Z direction, and a direction parallel to principal surfaces of the positive electrode current collectors 2 and the negative electrode current collectors 3 may be referred to as an X direction and a Y direction.

In the all solid-state battery 100, for example, a laminated structure of the power-generating element portions 1, the positive electrode current collectors 2, and the negative electrode current collectors 3 is sealed with a battery outer casing material (not illustrated) such as a laminate film, and is further sandwiched between two metal plates. This laminated structure is pressurized (confined) in the direction of lamination (Z direction). The lower limit value of the confining pressure in the direction of lamination applied to the power-generating element portions 1 is, for example, 0.1 MPa or more, preferably 1 MPa or more, more preferably 3 MPa or more, and still more preferably 5 MPa or more. The upper limit value of the confining pressure in the direction of lamination applied to the power-generating element portions 1 is, for example, 100 MPa or less, preferably 70 MPa or less, more preferably 40 MPa or less, and still more preferably 10 MPa or less.

The power-generating element portion 1 includes, for example, a positive electrode active material layer 11, a solid electrolyte layer 12, and a negative electrode active material layer 13. In the all solid-state battery 100, these layers are laminated in the order of the positive electrode active material layer 11, the solid electrolyte layer 12, and the negative electrode active material layer 13 from the positive electrode current collector 2 side. The periphery of the power-generating element portion 1 (periphery of the XY plane surface) is provided inside the peripheries of the positive electrode current collector 2 and the negative electrode current collector 3. The planar (XY plane surface) shape of each of the positive electrode active material layer 11, the solid electrolyte layer 12, and the negative electrode active material layer 13 is, for example, a quadrangle such as a rectangle, a circle, an ellipse, or the like. The insulating first elastic member 41 is provided together with the positive electrode active material layer 11 between the positive electrode current collector 2 and the solid electrolyte layer 12. The insulating second elastic member 42 is provided together with the negative electrode active material layer 13 between the negative electrode current collector 3 and the solid electrolyte layer 12.

The positive electrode current collector 2 and the negative electrode current collector 3 are conductive members that function as a flow path of electrons during a battery reaction (charge and discharge reaction), and have, for example, a thin plate (foil) shape. The negative electrode current collector 3 faces the positive electrode current collector 2 with the power-generating element portion 1 (the solid electrolyte layer 12) in between. The materials constituting the positive electrode current collector 2 and the negative electrode current collector 3 are not particularly limited. As the materials constituting the positive electrode current collector 2 and the negative electrode current collector 3, for example, a metal or a resin having conductivity can be adopted.

Examples of the metal include aluminum (Al), nickel (Ni), iron (Fe), stainless steel (SUS), titanium (Ti), copper (Cu), and the like. In addition to these, a clad material of nickel and aluminum, a clad material of copper and aluminum, or the like may be used. Further, the foil may be a foil in which a metal surface is coated with aluminum. Above all, aluminum, stainless steel, copper, and nickel are preferred from the viewpoint of the electron conductivity, the battery operating potential, and the like. Examples of the resin having conductivity include a resin obtained by adding a conductive filler to a non-conductive polymer material. The thicknesses of the positive electrode current collector 2 and the negative electrode current collector 3 are not particularly limited, and are, for example, 10 um to 100 µm.

The positive electrode current collector 2 and the negative electrode current collector 3 may have a single-layer structure made of a single material, or may have a laminated structure in which layers made of these materials are appropriately combined. From the viewpoint of weight reduction, it is preferable that the positive electrode current collector 2 and the negative electrode current collector 3 include at least a conductive resin layer made of a resin having conductivity. From the viewpoint of blocking the movement of lithium ions between single battery layers, a metal layer may be provided on a part of the positive electrode current collector 2 and a part of the negative electrode current collector 3.

The planar (XY plane surface) shape of the positive electrode current collector 2 and the negative electrode current collector 3 is, for example, a quadrangle such as a rectangle, a circle, an ellipse, or the like. The size of the XY plane surface of the positive electrode current collector 2 and the size of the XY plane surface of the negative electrode current collector 3 are, for example, approximately identical.

The positive electrode active material layer 11 is provided on the surface of the positive electrode current collector 2, more specifically, on the principal surface of the positive electrode current collector 2. The positive electrode active material layer 11 is provided, for example, on one principal surface and the other principal surface of the positive electrode current collector 2, and the positive electrode current collector 2 is disposed between a pair of the positive electrode active material layers 11.

Preferably, the positive electrode active material layer 11 is formed using, for example, NMC 811 (lithium nickel manganese cobalt oxide) as a main raw material. Further, it is preferable that the positive electrode active material layer 11 contains a sulfur-containing positive electrode active material. The kind of the sulfur-containing positive electrode active material is not particularly limited, but examples thereof include particles or thin films of an organic sulfur compound or an inorganic sulfur compound in addition to the sulfur simple substance (S), and any material may be used as long as the material can release lithium ions during charging and occlude lithium ions during discharging by utilizing the oxidation-reduction reaction of sulfur.

The thickness (size in the Z direction) of the positive electrode active material layer 11 varies depending on the configuration of the intended lithium secondary battery, but is, for example, preferably within a range of 0.1 um to 1000 µm, and more preferably within a range of 40 um to 100 um. The thickness of the positive electrode active material layer 11 is preferably larger than the thickness of the negative electrode active material layer 13 at a SOC of 100%.

The elastic modulus of the positive electrode active material layer 11, specifically, the compressive elastic modulus of the positive electrode active material layer 11 is, for example, 0.1 GPa to 100 GPa, and desirably 3 GPa to 20 GPa. The compressive elastic modulus can be determined, for example, as follows. First, a test piece having a diameter of 2 mm is used and the thickness deformation amount is measured by a uniaxial compression test using a universal testing machine. Thereafter, the compressive strain is calculated based on the thickness deformation amount and the initial thickness. Next, a stress-strain diagram is created using the compressive stress measured simultaneously with the thickness deformation amount. The compressive elastic modulus can be obtained from the slope of the stress-strain diagram.

The solid electrolyte layer 12 is provided to be widened from the positive electrode active material layer 11 and the negative electrode active material layer 13. In other words, the size of the XY plane surface of the solid electrolyte layer 12 is larger than the size of the XY plane surfaces of the positive electrode active material layer 11 and the negative electrode active material layer 13. The solid electrolyte layer 12 is widened from the positive electrode active material layer 11 and the negative electrode active material layer 13, which makes it possible to reduce the occurrence of a short-circuit at the ends of the positive electrode active material layer 11 and the negative electrode active material layer 13. The solid electrolyte layer 12 is preferably widened from the positive electrode active material layer 11 and the negative electrode active material layer 13 over the entire periphery.

The positive electrode active material layer 11 and the first elastic member 41 are provided between the solid electrolyte layer 12 and the positive electrode current collector 2. In other words, the solid electrolyte layer 12 faces the positive electrode current collector 2 with the first elastic member 41 and the positive electrode active material layer 11 in between.

The negative electrode active material layer 13 and the second elastic member 42 are provided between the solid electrolyte layer 12 and the negative electrode current collector 3. In other words, the solid electrolyte layer 12 faces the negative electrode current collector 3 with the second elastic member 42 and the negative electrode active material layer 13 in between.

The solid electrolyte layer 12 interposed between the positive electrode active material layer 11 and the negative electrode active material layer 13 contains a solid electrolyte as a main component. Examples of the solid electrolyte include a sulfide solid electrolyte and an oxide solid electrolyte, and a sulfide solid electrolyte is preferred. Examples of the sulfide solid electrolyte include LPS-based (e.g. argyrodite (Li₆PS₅Cl)) materials and LGPS-based (e.g. Li₁₀GeP₂S₁₂) materials.

The thickness of the solid electrolyte layer 12 varies depending on the configuration of the intended lithium secondary battery, but is, for example, preferably within a range of 0.1 um to 1000 µm, and more preferably within a range of 10 um to 40 µm.

The negative electrode active material layer 13 is provided on the surface of the negative electrode current collector 3, more specifically, on the principal surface of the negative electrode current collector 3. The negative electrode active material layer 13 is provided, for example, on one principal surface and the other principal surface of the negative electrode current collector 3, and the negative electrode current collector 3 is disposed between a pair of the negative electrode active material layers 13. The negative electrode active material layer 13 provided between the negative electrode current collector 3 and the solid electrolyte layer 12 is disposed inside a periphery (periphery of the XY plane surface) of the solid electrolyte layer 12.

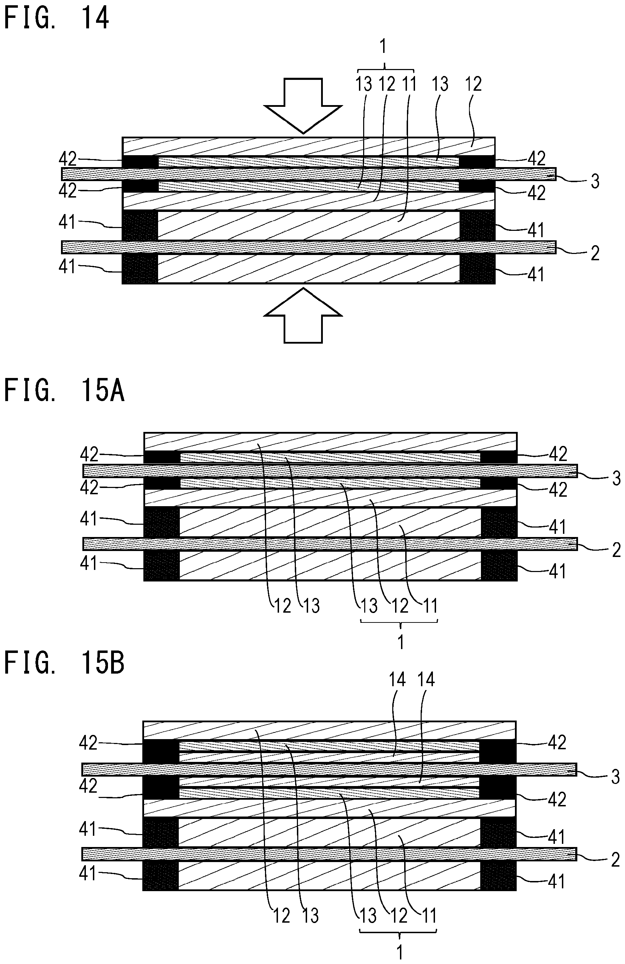

The negative electrode active material layer 13 is made of a material having electrical conductivity and/or lithium ion conductivity. The negative electrode active material layer 13 is made of, for example, a negative electrode active material containing a lithium alloy or a lithium metal. The negative electrode active material layer 13 is preferably made of lithium metal. The negative electrode active material layer 13 may be made of stainless steel (SUS), copper (Cu), carbon black (carbon fine particles), or the like. The thickness of the negative electrode active material layer 13 is, for example, within a range of 0.1 um to 1000 um. The compressive elastic modulus of the negative electrode active material layer 13 is, for example, 0.1 GPa to 100 GPa, and desirably 3 GPa to 20 GPa. When the all solid-state battery 100 is charged, a lithium metal layer (a metal layer 14 in Fig. 15B described later) is deposited between the negative electrode current collector 3 and the solid electrolyte layer 12. The negative electrode active material layer 13 at a SOC of 1000 contains an alkali metal such as lithium as a main component, as a result of which the battery capacity of the all solid-state battery 100 can be secured.

The insulating first elastic member 41 provided between the positive electrode current collector 2 and the solid electrolyte layer 12 covers a periphery of the positive electrode active material layer 11. Hence, the first elastic member 41 is provided in the same layer as the positive electrode active material layer 11. Although details will be described later, the first elastic member 41 is provided, and thus even when the solid electrolyte layer 12 is pressed during manufacturing, a local force is less likely to be applied to the solid electrolyte layer 12, and cracking or the like of the solid electrolyte layer 12 during manufacturing can be reduced.

Fig. 2 shows an example of planar (XY plane surfaces) shapes of the first elastic member 41 and the positive electrode active material layer 11. The first elastic member 41 covers the periphery of the positive electrode active material layer 11 over the entire periphery of the positive electrode active material layer 11. The first elastic member 41 is provided, for example, in a frame shape around the positive electrode active material layer 11.

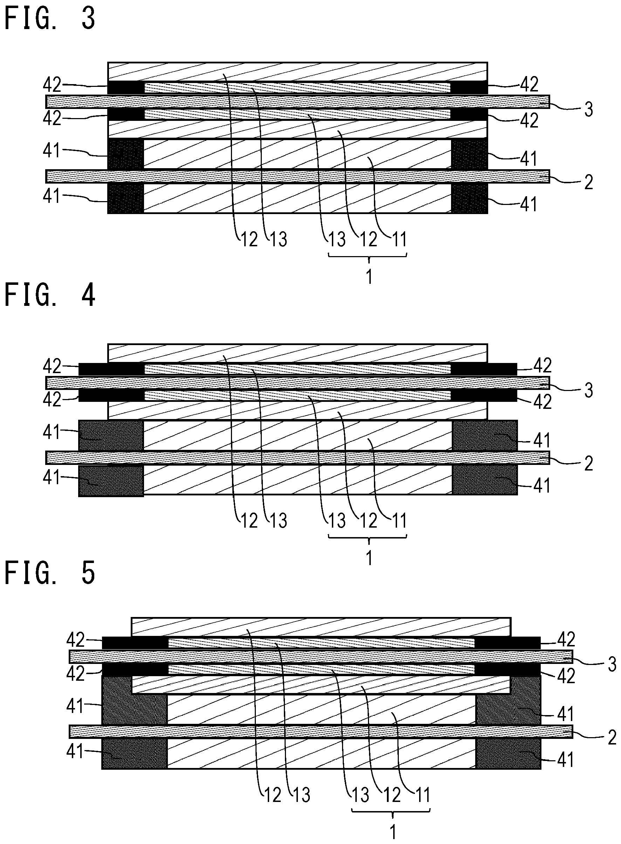

Fig. 3 shows a part of the all solid-state battery 100 shown in Fig. 1. The thickness (natural length) of the first elastic member 41 provided in the same layer as the positive electrode active material layer 11 is, for example, preferably within a range of 0.1 um to 1000 µm, and more preferably within a range of 40 um to 100 um. The thickness of the first elastic member 41 is preferably approximately the same as the thickness of the positive electrode active material layer 11 at a SOC (State of charge) of 0%, and for example, is preferably 0.9 times or more and 1.0 times or less the thickness of the positive electrode active material layer 11. This makes it possible to more effectively reduce damage of the solid electrolyte layer 12 during manufacturing. The thickness of the first elastic member 41 may be larger than the thickness of the positive electrode active material layer 11 as long as the effect is not impaired, and may be, for example, 1.1 times or less the thickness of the positive electrode active material layer 11 at a SOC of 0%.

The first elastic member 41 is provided, for example, from the position of the periphery of the positive electrode active material layer 11 to the position overlapping the periphery of the solid electrolyte layer 12. The periphery of the first elastic member 41 is disposed at the same position as the periphery of the solid electrolyte layer 12 in a planar view (XY plane surface).

Fig. 4 shows another example of the first elastic member 41. The first elastic member 41 may be provided to be widened from the solid electrolyte layer 12, and the periphery of the first elastic member 41 may be disposed outside the periphery of the solid electrolyte layer 12 in a planar view (XY plane surface). As described above, the first elastic member 41 is provided from the position of the periphery of the positive electrode active material layer 11 to the position overlapping at least the periphery of the solid electrolyte layer 12, whereby damage of the solid electrolyte layer 12 during manufacturing can be more effectively reduced.

The first elastic member 41 is preferably disposed inside the positive electrode current collector 2 and the negative electrode current collector 3 in a planar view (XY plane surface). The first elastic member 41 is provided inside the positive electrode current collector 2 and the negative electrode current collector 3, and thus even when the volume of the all solid-state battery 100 is changed due to charging and discharging, the first elastic member 41 is less likely to be affected by the change. Consequently, a deterioration in the first elastic member 41 can be reduced, and a decrease in reliability of the all solid-state battery 100 can be reduced.

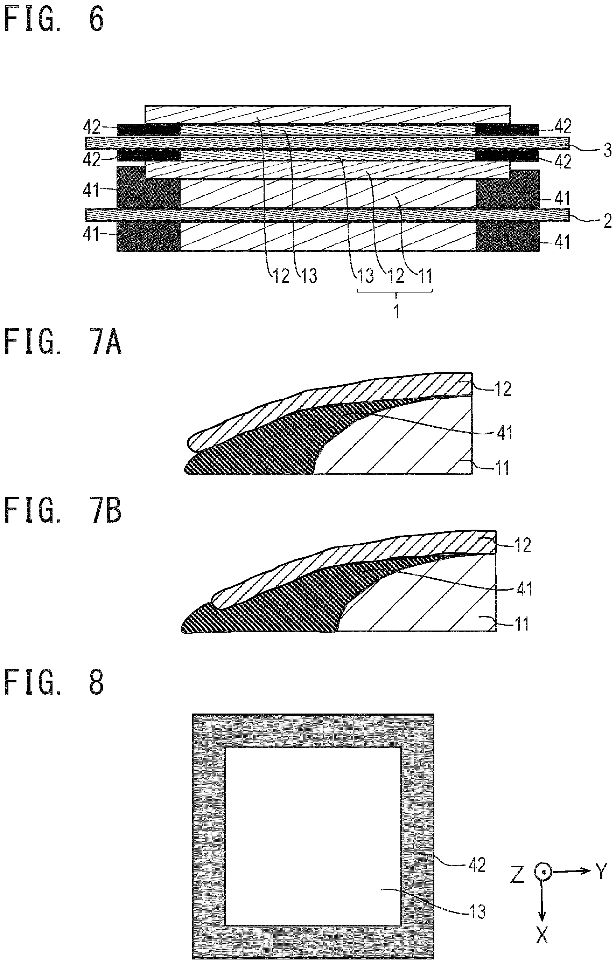

Figs. 5 and 6 show another example of the first elastic member 41. The first elastic member 41 widened from solid electrolyte layer 12 may cover the whole (Fig. 5) or a part (Fig. 6) of the end surface of the solid electrolyte layer 12.

Figs. 7A and 7B each show the vicinity of an end surface of the solid electrolyte layer 12 in an enlarged manner. Fig. 7A shows the end surface of the solid electrolyte layer 12 (e.g. Fig. 4) not covered with the first elastic member 41, and Fig. 7B shows the end surface of the solid electrolyte layer 12 (e.g. Fig. 6) covered with the first elastic member 41. The first elastic member 41 covers the end surface of the solid electrolyte layer 12, whereby the area of contact between the solid electrolyte layer 12 and the first elastic member 41 increases, and the adhesion between them is improved. Therefore, for example, even when the all solid-state battery 100 is mounted on a vehicle or the like, it is possible to reduce peeling between the solid electrolyte layer 12 and the first elastic member 41 and damage of the solid electrolyte layer 12 due to vibration impact or the like.

The first elastic member 41 widened from the solid electrolyte layer 12 is preferably disposed from one end (e.g. the lower end) to another end (e.g. the upper end) in the thickness direction (Z direction) of the solid electrolyte layer 12, and is preferably disposed at a position not exceeding the other end of the solid electrolyte layer 12. The first elastic member 41 is provided at a position not exceeding the other end in the thickness direction of the solid electrolyte layer 12, whereby a deterioration in battery performance caused by the first elastic member 41 is reduced.

The first elastic member 41 has an elastic modulus less than or equal to an elastic modulus of the positive electrode active material layer 11. Thus, when the confining pressure is applied to the direction of lamination of the power-generating element portion 1 during the operation of the all solid-state battery 100, the first elastic member 41 is deformed to the same extent as the positive electrode active material layer 11. Accordingly, a predetermined confining pressure is applied to the positive electrode active material layer 11, and the all solid-state battery 100 exhibits desired battery performance. The first elastic member 41 is deformed following a volume change of the positive electrode active material layer 11 during charging and discharging of the all solid-state battery 100.

The elastic modulus of the first elastic member 41, specifically, the compressive elastic modulus is, for example, 0.1 GPa to 100 GPa, and desirably 1 GPa to 10 GPa. Further, the elastic modulus of the first elastic member 41 is preferably equal to the elastic modulus of the positive electrode active material layer 11. This makes it possible to more effectively reduce damage of the solid electrolyte layer 12 during manufacturing.

The first elastic member 41 is made of, for example, a green compact of an inorganic powder containing polyimide, polyethylene, or a binder. The first elastic member 41 may be made of aluminum oxide (Al₂O₃, bulk), zirconia (ZrO₂), polyethylene terephthalate (PET), Kapton (registered trademark), epoxy resin, polytetrafluoroethylene (PTFE), rubber (natural rubber or synthetic rubber), or the like.

The insulating second elastic member 42 provided between the negative electrode current collector 3 and the solid electrolyte layer 12 covers the periphery of the negative electrode active material layer 13. Hence, the second elastic member 42 is provided in the same layer as the negative electrode active material layer 13. Providing the second elastic member 42 makes it possible to more effectively reduce cracking or the like of the solid electrolyte layer 12 during manufacturing.

Fig. 8 shows an example of planar (XY plane surfaces) shapes of the second elastic member 42 and the negative electrode active material layer 13. The second elastic member 42 covers the periphery of the negative electrode active material layer 13 over the entire periphery of the negative electrode active material layer 13. The second elastic member 42 is provided, for example, in a frame shape around the negative electrode active material layer 13.

The thickness of the second elastic member 42 provided in the same layer as the negative electrode active material layer 13 is, for example, within a range of 0.1 um to 1000 um. Preferably, the thickness (natural length) of the second elastic member 42 is the same as the thickness of the negative electrode active material layer 13 at a SOC of 0%, or larger than the thickness of the negative electrode active material layer 13. This makes it possible to more effectively reduce damage of the solid electrolyte layer 12 during manufacturing.

The second elastic member 42 is provided, for example, from the position of the periphery of the negative electrode active material layer 13 to the position overlapping the periphery of the solid electrolyte layer 12, and the periphery of the second elastic member 42 is disposed at the same position as the periphery of the solid electrolyte layer 12 in a planar view (XY plane surface) (Fig. 3). Alternatively, the second elastic member 42 may be provided to be widened from the solid electrolyte layer 12, and the periphery of the second elastic member 42 may be disposed outside the periphery of the solid electrolyte layer 12 in a planar view (XY plane surface). The position of the periphery of the first elastic member 41 may be different from the position of the periphery of the second elastic member 42. The second elastic member 42 is provided from the position of the periphery of the negative electrode active material layer 13 to the position overlapping at least the periphery of the solid electrolyte layer 12, whereby damage of the solid electrolyte layer 12 during manufacturing can be more effectively reduced.

The second elastic member 42 is preferably disposed inside the positive electrode current collector 2 and the negative electrode current collector 3 in a planar view (XY plane surface). The second elastic member 42 is provided inside the positive electrode current collector 2 and the negative electrode current collector 3, and thus even when the volume of the all solid-state battery 100 is changed due to charging and discharging, the second elastic member 42 is less likely to be affected by the change. Consequently, a deterioration in the second elastic member 42 can be reduced, and a decrease in reliability of the all solid-state battery 100 can be reduced.

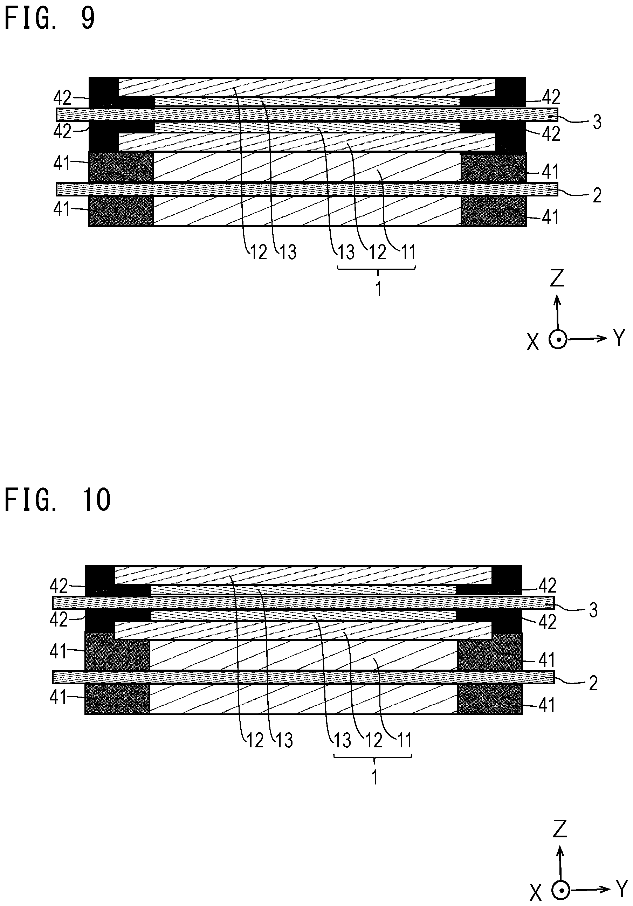

Figs. 9 and 10 show another example of the second elastic member 42. The second elastic member 42 widened from solid electrolyte layer 12 may cover the whole (Fig. 9) or a part (Fig. 10) of the end surface of solid electrolyte layer 12. A part of the end surface of the solid electrolyte layer 12 may be covered with the first elastic member 41, and the rest may be covered with the second elastic member 42 (Fig. 10).

The second elastic member 42 preferably has an elastic modulus less than or equal to an elastic modulus of the negative electrode active material layer 13, and more preferably has the elastic modulus equal to the elastic modulus of the negative electrode active material layer 13. This makes it possible to more effectively reduce damage of the solid electrolyte layer 12 during manufacturing.

In addition, the second elastic member 42 preferably has an elastic modulus smaller than the elastic modulus of the first elastic member 41. In the all solid-state battery 100, the volume of the negative electrode active material layer 13 during charging and discharging is greatly changed as compared with the positive electrode active material layer 11. Thus, the second elastic member 42 having a smaller elastic modulus is provided at the periphery of the negative electrode active material layer 13, whereby the first elastic member 41 and the second elastic member 42 are easily deformed following the process of charging and discharging of the all solid-state battery 100. The second elastic member 42 is deformed following a volume change of the negative electrode active material layer 13 during charging and discharging of the all solid-state battery 100.

The elastic modulus of the second elastic member 42, specifically, the compressive elastic modulus is, for example, 0.1 GPa to 100 GPa, and desirably 1 GPa to 10 GPa.

The second elastic member 42 is made of, for example, polyimide, polyethylene, or ethylene propylene diene rubber (EPDM). The second elastic member 42 may be made of aluminum oxide, zirconia, polyethylene terephthalate (PET), Kapton (registered trademark), epoxy resin, polytetrafluoroethylene (PTFE), rubber (natural rubber or synthetic rubber), or the like. The second elastic member 42 preferably has rubber elasticity, and preferably contains a rubber material. This makes it possible to more effectively reduce damage of the solid electrolyte layer 12 during manufacturing.

### [Method for Manufacturing All Solid-State Battery]

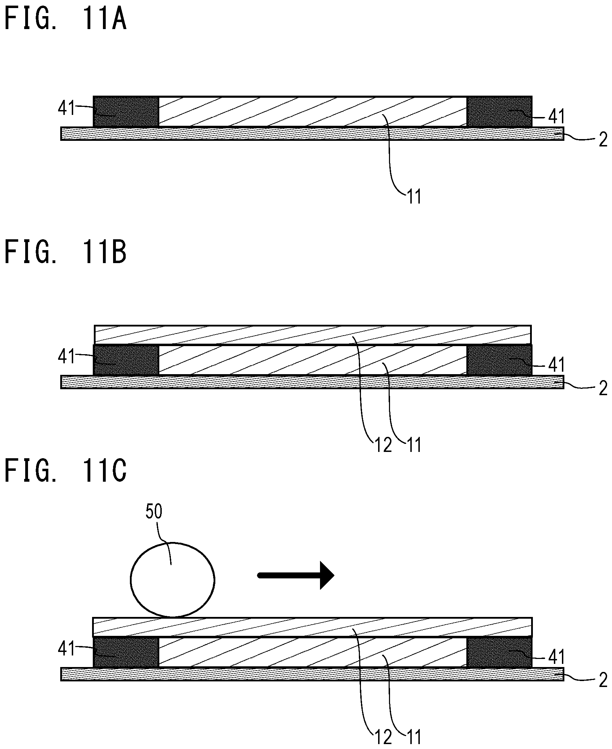

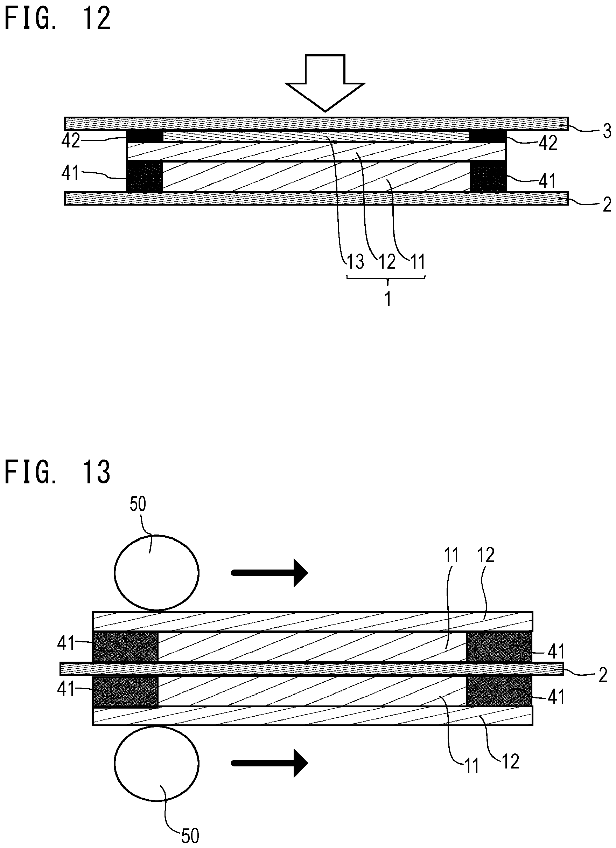

Figs. 11A to 11C and 12 sequentially show each step of the method for manufacturing the all solid-state battery 100.

First, the positive electrode current collector 2 is formed, and then the positive electrode active material layer 11 and the first elastic member 41 are formed on the surface (principal surface) of the positive electrode current collector 2 (Fig. 11A). The first elastic member 41 is formed using a mask, for example, after forming the positive electrode active material layer 11 on the positive electrode current collector 2. The first elastic member 41 is formed by, for example, applying a resin material to the surface of the positive electrode current collector 2. The first elastic member 41 may be formed using a transfer method, or the first elastic member 41 may be fixed onto the positive electrode current collector 2 using an adhesive layer. The positive electrode active material layer 11 and the first elastic member 41 may be formed on one principal surface and the other principal surface of the positive electrode current collector 2 (see Fig. 13 described later).

After the positive electrode active material layer 11 and the first elastic member 41 are formed on the surface of the positive electrode current collector 2, the solid electrolyte layer 12 is formed on the positive electrode active material layer 11 and the first elastic member 41 (Fig. 11B). The solid electrolyte layer 12 is formed by applying a solid electrolyte onto the positive electrode active material layer 11 and the first elastic member 41 using, for example, a die coater. The solid electrolyte layer 12 may be formed using a transfer method.

After the solid electrolyte layer 12 is formed, the solid electrolyte layer 12 is pressed using a roll press 50 (Fig. 11C) to bring the solid electrolyte layer 12 into close contact with the positive electrode active material layer 11. The solid electrolyte layer 12 and the positive electrode active material layer 11 are in close contact with each other, as a result of which the contact resistance between the solid electrolyte layer 12 and the positive electrode active material layer 11 is reduced, and the battery performance of the all solid-state battery 100 is improved. Here, since the first elastic member 41 is formed on the periphery of the positive electrode active material layer 11, a local force is less likely to be applied to the solid electrolyte layer 12 when the solid electrolyte layer 12 is pressed using the roll press 50. Hence, bending stress to the solid electrolyte layer 12 is relaxed, and damage of the solid electrolyte layer 12 during manufacturing can be reduced. Instead of the roll press 50, the solid electrolyte layer 12 may be brought into close contact with the positive electrode active material layer 11 by using isotropic pressure press.

Fig. 13 shows another example of the step shown in Fig. 11C. The solid electrolyte layer 12 formed on one principal surface side and the other principal surface side of the positive electrode current collector 2 may be pressed using the roll press 50 or isotropic pressure press.

After the solid electrolyte layer 12 is brought into close contact with the positive electrode active material layer 11, the negative electrode active material layer 13 and the negative electrode current collector 3 are assembled thereto (Fig. 12). Specifically, the negative electrode active material layer 13 and the second elastic member 42 are formed on the surface of the negative electrode current collector 3, and then the negative electrode active material layer 13 is brought into close contact with the solid electrolyte layer 12. For example, the positive electrode current collector 2, the positive electrode active material layer 11, the solid electrolyte layer 12, and the negative electrode active material layer 13, and the negative electrode current collector 3 are pressed in the direction of lamination thereof, thereby bringing the negative electrode active material layer 13 into close contact with the solid electrolyte layer 12. Here, since the second elastic member 42 is formed on the periphery of the negative electrode active material layer 13, a local force is less likely to be applied to the solid electrolyte layer 12 during assembling. Hence, bending stress to the solid electrolyte layer 12 is relaxed, and damage of the solid electrolyte layer 12 during manufacturing can be reduced.

Fig. 14 shows another example of the step shown in Fig. 12. The negative electrode active material layer 13 and the negative electrode current collector 3 may be assembled to one principal surface side and the other principal surface side of the positive electrode current collector 2.

### [Operation of All Solid-State Battery]

Figs. 15A and 15B show examples of the configurations of the all solid-state battery 100 when the SOC is 0% and the all solid-state battery 100 when the SOC is 100 (fully charged state), respectively. The all solid-state battery 100 operates, for example, in a state where a predetermined confining pressure is applied in the direction of lamination of the power-generating element portion 1. When the all solid-state battery 100 is charged, the metal layer 14 is formed between the negative electrode current collector 3 and the solid electrolyte layer 12, more specifically, between the negative electrode current collector 3 and the negative electrode active material layer 13 (Fig. 15B). The metal layer 14 is formed by lithium (Li) ions in the positive electrode active material layer 11 which have passed through the solid electrolyte layer 12 and precipitated as lithium metal (LiM) on the surface of the negative electrode current collector 3, and functions as the negative electrode active material layer 13. Hence, in the charged all solid-state battery 100, the negative electrode active material layer 13 includes the metal layer 14. Meanwhile, when the all solid-state battery 100 is discharged, lithium ions pass through the solid electrolyte layer 12 from the negative electrode active material layer 13 and are absorbed in the positive electrode active material layer 11. At a SOC of 0%, the metal layer 14 disappears (Fig. 15A).

### [Action and Effect of All Solid-State Battery]

In the all solid-state battery 100 according to the present embodiment, the first elastic member 41 covering the periphery of the positive electrode active material layer 11 is provided, and the solid electrolyte layer 12 facing the positive electrode current collector 2 with the first elastic member 41 and the positive electrode active material layer 11 in between is provided. Consequently, even when the solid electrolyte layer 12 is pressed during manufacturing, a local force is less likely to be applied to the solid electrolyte layer 12, and the occurrence of cracking or the like of the solid electrolyte layer 12 is reduced. Hereinafter, this action and effect will be described in detail.

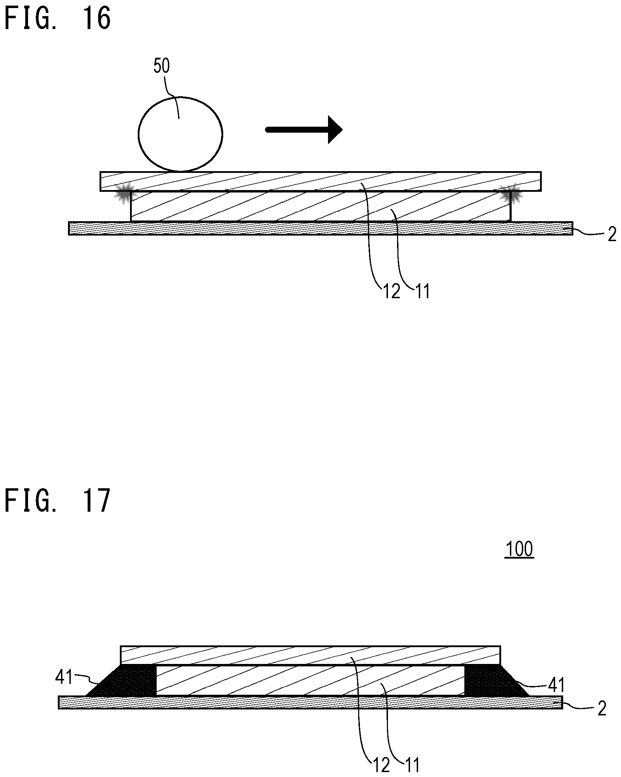

Fig. 16 shows a step of the method for manufacturing all solid-state battery according to the comparative example, and the step corresponds to the step of Fig. 11C described above. In this method for manufacturing all solid-state battery, the first elastic member (e.g. the first elastic member 41 in Fig. 11C) is not formed on the periphery of the positive electrode active material layer 11. In the method for manufacturing all solid-state battery, when the solid electrolyte layer 12 is formed to be widened from the positive electrode active material layer 11, a force is locally applied to the solid electrolyte layer 12 in the vicinity of the periphery of the positive electrode active material layer 11 at the time of pressing by the roll press 50, and bending stress is generated. Due to the bending stress generated in the solid electrolyte layer 12, cracking or the like of the solid electrolyte layer 12 may occur.

On the other hand, in the all solid-state battery 100, after the first elastic member 41 is formed on the periphery of the positive electrode active material layer 11, the solid electrolyte layer 12 is formed on the positive electrode active material layer 11 and the first elastic member 41. Thus, the solid electrolyte layer 12 at the portion widened from the positive electrode active material layer 11 is supported by the first elastic member 41, the bending stress applied to the solid electrolyte layer 12 is relaxed even at the time of pressing by the roll press 50.

In addition, the first elastic member 41 is provided from the position of the periphery of the positive electrode active material layer 11 to the position overlapping at least the periphery of the solid electrolyte layer 12, and thus the entire solid electrolyte layer 12 at the portion widened from the positive electrode active material layer 11 is supported by the first elastic member 41. Therefore, the bending stress applied to solid electrolyte layer 12 is relaxed more effectively.

Furthermore, the first elastic member 41 has the elastic modulus equal to the elastic modulus of the positive electrode active material layer 11 and has approximately the same thickness as the thickness of the positive electrode active material layer 11, and thus the bending stress applied to the solid electrolyte layer 12 is more effectively relaxed.

In the all solid-state battery 100, the second elastic member 42 is formed on the periphery of the negative electrode active material layer 13, and thus, when the positive electrode side and the negative electrode side are assembled with the solid electrolyte layer 12 in between, the solid electrolyte layer 12 at the portion widened from the negative electrode active material layer 13 is protected by the second elastic member 42. Therefore, the bending stress applied to the solid electrolyte layer 12 is also relaxed in the assembling step.

Furthermore, the second elastic member 42 is provided from the position of the periphery of the negative electrode active material layer 13 to the position overlapping at least the periphery of the solid electrolyte layer 12, and thus the entire solid electrolyte layer 12 at the portion widened from the negative electrode active material layer 13 is protected by the second elastic member 42. Therefore, the bending stress applied to solid electrolyte layer 12 is relaxed more effectively.

In addition, the second elastic member 42 has the elastic modulus equal to the elastic modulus of the negative electrode active material layer 13, and thus the bending stress applied to the solid electrolyte layer 12 is relaxed more effectively.

As described above, in the all solid-state battery 100 according to the present embodiment, the first elastic member 41 covering the periphery of the positive electrode active material layer 11 is provided, and the solid electrolyte layer 12 facing the positive electrode current collector 2 with the first elastic member 41 and the positive electrode active material layer 11 in between is provided. Consequently, even when the solid electrolyte layer 12 is pressed during manufacturing, a local force is less likely to be applied to the solid electrolyte layer 12, and the occurrence of cracking or the like of the solid electrolyte layer 12 is reduced. Thus, it is possible to reduce damage during the manufacturing process.

Hereinafter, a modified example of the all solid-state battery 100 described in the above embodiment will be described. In this regard, hereinafter, a detailed description of the same configuration as each configuration of the all solid-state battery described in the above embodiment will be omitted to avoid duplication of description.

### <Modified Example>

Fig. 17 shows a configuration of a main part of the all solid-state battery 100 according to a modified example. The first elastic member 41 of the all solid-state battery 100 has a tapered shape. Except for this point, the all solid-state battery 100 according to the modified example has the same configuration as the all solid-state battery 100 described in the above embodiment, and exerts a similar action and effect to that of the all solid-state battery 100 described in the above embodiment.

The first elastic member 41 provided between the solid electrolyte layer 12 and the positive electrode current collector 2 gradually increases from the solid electrolyte layer 12 toward the positive electrode current collector 2. In other words, the tapered first elastic member 41 has an inclined surface directed outward from the solid electrolyte layer 12 side to the positive electrode current collector 2 side.

The all solid-state battery 100 is manufactured, for example, as follows. First, the positive electrode current collector 2 is formed, and then the positive electrode active material layer 11 and the tapered first elastic member 41 are formed on the surface of the positive electrode current collector 2 (see Fig. 11A). Next, the solid electrolyte layer 12 is formed on the positive electrode active material layer 11 and the first elastic member 41 (see Fig. 11B). Thereafter, for example, the solid electrolyte layer 12 is pressed using the roll press 50 to bring the solid electrolyte layer 12 into close contact with the positive electrode active material layer 11 (see Fig. 11C). At this time, the roll press 50 is moved along the inclined surface of the first elastic member 41, as a result of which stress is less likely to be applied to the end of the solid electrolyte layer 12.

The all solid-state battery 100 according to this modified example includes the first elastic member 41 on the periphery of the positive electrode active material layer 11 as described in the above embodiment. Thus, even if the solid electrolyte layer 12 is pressed during manufacturing, a local force is less likely to be applied to the solid electrolyte layer 12, and the occurrence of cracking or the like of the solid electrolyte layer 12 is reduced. In addition, since the first elastic member 41 has a tapered shape, stress is less likely to be applied to the end of the solid electrolyte layer 12. Thus, it is possible reduce damage in the manufacturing process more effectively.

The all solid-state battery of the present invention has been described above using the embodiment and the modified example. However, the present invention can be appropriately added, modified, and omitted by those skilled in the art within the scope of the technical idea. For example, the configuration, shape, size, and the like of each layer of the all solid-state battery described in the above embodiment and modified example are merely examples, and other configurations, shapes, sizes, and the like may be contemplated.

For example, in the above embodiment, the laminate type (internal parallel connection type) all-solid lithium secondary battery has been described as an example, but the present invention is also applicable to other secondary batteries such as a bipolar type (bipolar type). Further, in the above embodiment, the all solid-state battery 100 including the plurality of power-generating element portions 1, the plurality of positive electrode current collectors 2, and the plurality of negative electrode current collectors 3 has been described, but the all solid-state battery 100 may have a single-layer structure.

In Figs. 2 and 8, the positive electrode active material layer 11 and the negative electrode active material layer 13 each having a quadrangular planar shape are illustrated, but the positive electrode active material layer 11 and the negative electrode active material layer 13 may have another planar shape such as a circle or an ellipse. The planar shape of the all solid-state battery 100 may be any shape such as a circle, an ellipse, or a quadrangle.

In the above embodiment, an example has been described in which the metal layer 14 containing a lithium metal is deposited on the negative electrode active material layer 13 when the all solid-state battery 100 is charged. However, in the all solid-state battery 100, the metal layer 14 containing an alkali metal such as sodium (Na) or potassium (K) may be deposited during charging.

In the above embodiment, the example in which the negative electrode active material layer 13 is also provided in the all solid-state battery 100 at a SOC of 0% has been described, but the all solid-state battery 100 at a SOC of 0% does not necessarily include the negative electrode active material layer 13. In other words, only the metal layer 14 deposited during charging may function as the negative electrode active material layer, and the metal layer 14 may correspond to a specific example of the negative electrode active material layer of the present invention.

This application is based on Japanese Patent Application No. 2021-163922 filed on October 5, 2021, the disclosure of which is incorporated by reference in its entirety.

Note that the following embodiments are also included in the scope of the present invention; the all solid-state battery according to aspect 1, including the features of aspect 2; the all solid-state battery according to aspect 1 or 2, including the features of aspect 3; the all solid-state battery according to any one of aspects 1 to 3, including the features of aspect 4; the all solid-state battery according to any one of aspects 1 to 4, including the features of aspect 5; the all solid-state battery according to any one of aspects 1 to 5, including the features of aspect 6; the all solid-state battery according to aspect 6, including the features of aspect 7; the all solid-state battery according to aspect 6 or 7, including the features of aspect 8; the all solid-state battery according to any one of aspects 6 to 8, including the features of aspect 9; the all solid-state battery according to any one of aspects 1 to 9, including the features of aspect 10; the all solid-state battery according to any one of aspects 1 to 10, including the features of aspect 11; the all solid-state battery according to any one of aspects 1 to 11, including the features of aspect 12; the all solid-state battery according to aspect 12, including the features of aspect 13; the all solid-state battery according to any one of aspects 1 to 13, including the features of aspect 14; and the method for manufacturing all solid-state battery according to any one of aspects 1 to 14, including the features of aspect 15.

## Claims

1. An all solid-state battery comprising:
a positive electrode current collector;
a positive electrode active material layer provided on a surface of the positive electrode current collector;
a first elastic member covering a periphery of the positive electrode active material layer and having an elastic modulus less than or equal to an elastic modulus of the positive electrode active material layer;
a solid electrolyte layer facing the positive electrode current collector with the first elastic member and the positive electrode active material layer in between;
a negative electrode current collector facing the positive electrode current collector with the solid electrolyte layer in between; and
a negative electrode active material layer provided between the negative electrode current collector and the solid electrolyte layer and disposed inside a periphery of the solid electrolyte layer.

2. The all solid-state battery according to claim 1, wherein the elastic modulus of the first elastic member is equal to the elastic modulus of the positive electrode active material layer.

3. The all solid-state battery according to claim 1 or 2, wherein the first elastic member is provided from a position of the periphery of the positive electrode active material layer to a position overlapping at least the periphery of the solid electrolyte layer.

4. The all solid-state battery according to claim 1 or 2, wherein a thickness of the first elastic member is 0.9 times or more and 1.1 times or less a thickness of the positive electrode active material layer.

5. The all solid-state battery according to claim 1 or 2, wherein the first elastic member has a tapered shape.

6. The all solid-state battery according to claim 1 or 2, further comprising a second elastic member provided between the negative electrode current collector and the solid electrolyte layer, covering a periphery of the negative electrode active material layer, and having an elastic modulus smaller than the elastic modulus of the first elastic member.

7. The all solid-state battery according to claim 6, wherein the elastic modulus of the second elastic member is less than or equal to an elastic modulus of the negative electrode active material layer.

8. The all solid-state battery according to claim 6, wherein the elastic modulus of the second elastic member is equal to an elastic modulus of the negative electrode active material layer.

9. The all solid-state battery according to claim 6, wherein the second elastic member contains a rubber.

10. The all solid-state battery according to claim 1 or 2, wherein the first elastic member is provided to be widened from the solid electrolyte layer, and the first elastic member widened from the solid electrolyte layer is disposed between one end and another end in a thickness direction of the solid electrolyte layer.

11. The all solid-state battery according to claim 1 or 2, wherein the first elastic member is provided inside a position of a periphery of the positive electrode current collector.

12. The all solid-state battery according to claim 1 or 2, wherein, in a fully charged state, the negative electrode active material layer contains an alkali metal.

13. The all solid-state battery according to claim 12, wherein the alkali metal is lithium.

14. The all solid-state battery according to claim 1 or 2, wherein a thickness of the positive electrode active material layer is larger than a thickness of the negative electrode active material layer in a fully charged state.

15. A method for manufacturing all solid-state battery, comprising:
forming a positive electrode current collector;
forming a positive electrode active material layer and a first elastic member on a surface of the positive electrode current collector, the first elastic member covering a periphery of the positive electrode active material layer and having an elastic modulus less than or equal to an elastic modulus of the positive electrode active material layer;
forming a solid electrolyte layer on the first elastic member and the positive electrode active material layer; and
pressing the solid electrolyte layer to bring the solid electrolyte layer into close contact with the positive electrode active material layer.
